# EUROPÄISCHE PATENTANMELDUNG

(11) **EP 1 841 131 A1**
(43) Veröffentlichungstag der Anmeldung: **03.10.2007**
(21) Anmeldenummer: 06006450.8
(22) Anmeldetag: 28.03.2006
(51) Int. Cl.: H04L 12/24

(54) **Konfigurationsmanagement mit zusätzlichen Operationen**

(71) Anmelder: NOKIA SIEMENS NETWORKS GMBH & CO. KG, 81541 München (DE)
(72) Erfinder: Goerge, Jürgen, 81375 München (DE)

(57) **Zusammenfassung**

Die Erfindung betrifft ein Verfahren zum Betreiben eines Managementsystems, bei welchem Konfigurationsdaten (DATA) und zumindest ein Wert von zumindest einem Attribut von einem Manager (NMC) an einen Agenten (EM) übertragen werden. Bei dem zumindest einen Attribut handelt es sich um ein Attribut eines dem Agenten (EM) zugeordneten Objektes, wobei das Attribut ein Vorgehen in Bezug auf die Konfigurationsdaten (DATA) beschreibt. Weiterhin betrifft die Erfindung einen Manager (NMC) und einen Agenten (EM) zur Durchführung des Verfahrens.

## Beschreibung

Die Erfindung betrifft ein Verfahren zum Betreiben eines Managementsystems, bei welchem Konfigurationsdaten von einem Manager an einen Agenten übertragen werden.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Managementsystems, sowie Vorrichtungen zur Durchführung des Verfahrens aufzuzeigen.

Diese Aufgabe wird durch ein Verfahren mit den Merkmalen des Anspruchs 1, sowie durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren werden Konfigurationsdaten und zumindest ein Wert von zumindest einem Attribut von einem Manager an einen Agenten übertragen. Bei dem zumindest einen Attribut handelt es sich um ein Attribut eines dem Agenten zugeordneten Objektes. Das Attribut beschreibt ein Vorgehen in Bezug auf die Konfigurationsdaten.

Konfigurationsdaten können z.B. das Erzeugen von Objekten, das Löschen von Objekten, oder die Veränderung von manchen oder allen Attributen von Objekten betreffen.

Neben Konfigurationsdaten wird dem Agenten zumindest ein Wert von zumindest einem Attribut mitgeteilt. Hierbei ist es möglich, dass einer oder mehrere Werte für ein einziges Attribut übertragen werden, oder dass für eine Mehrzahl von Attributen einer oder mehrere Werte übertragen werden. Das oder die Attribute stellen Attribute eines bestimmten Objektes dar, welches dem Agenten zugeordnet ist. Dass das Objekt dem Agenten zugeordnet ist, bedeutet, dass das Objekt im Objektbaum unter dem Agenten steht und mit diesem verbunden ist. Der Agent kann somit auf das Objekt zugreifen.

Das Objekt weist eines oder mehrere Attribute auf, wobei für jedes Attribut einer oder mehrere Werte möglich sind. Die Attribute sind mit Bedeutungen belegt. Zumindest einem der Attribute ist die Bedeutung eines Vorgehens in Bezug auf die Konfigurationsdaten zugeordnet. Durch Angabe eines Wertes dieses Attributes kann das Vorgehen konkretisiert werden. Nach Empfang der Konfigurationsdaten und des Wertes des Attributes kann der Agent entsprechend dem durch das Attribut bzw. durch den übermittelten Wert des Attributes vorgegebenen Vorgehen handeln.

Der Wert des an den Agenten übertragenen Attributs kann sich lediglich auf die Konfigurationsdaten beziehen, so dass für andere Konfigurationsdaten ein anderer Wert verwendet wird. Es ist jedoch auch möglich, dass der Wert sich auf mehrere Übertragungen von Konfigurationsdaten bzw. das Vorgehen in Bezug auf diese mehreren Konfigurationsdaten bezieht. Es ist vorteilhaft, auch für dieses Frage ein Attribut des Objektes zu verwenden. Dieses Attribut kann dann angeben, ob eine Vorgehensweise in Bezug auf Konfigurationsdaten von dem Agenten gespeichert werden soll, so dass sie mehrmals anwendbar ist ohne eigene Aufforderung hierzu durch Verwendung des betreffenden der Vorgehensweise entsprechenden Attributs.

In Weiterbildung der Erfindung betreffen die Konfigurationsdaten die Konfiguration des Agenten und/oder die Konfiguration einer oder mehrerer gegenüber dem Agenten als Agenten fungierenden Einrichtungen. In Bezug auf das Vorgehen, welches das Attribut bzw. der Wert des Attributes vorgibt, ist es dementsprechend möglich, dass dies ausschließlich von dem Agent durchgeführt wird, oder dass es von dem Agenten in Zusammenarbeit mit einem oder mehreren seiner Agenten durchgeführt wird.

Einer Ausgestaltung der Erfindung gemäß betrifft das Vorgehen eine Überprüfung der Konfigurationsdaten, z.B. auf Konsistenz oder Vollständigkeit. Zusätzlich oder alternativ kann das Vorgehen eine Überprüfung einer unter Verwendung der Konfigurationsdaten erreichbaren Konfiguration betreffen. Auf diese Weise kann die Zielfiguration z.B. auf Konsistenz geprüft werden, bevor diese tatsächlich aktiviert wird. Zusätzlich oder alternativ kann das Vorgehen eine Überprüfung einer vor Verwendung der Konfigurationsdaten vorliegenden Konfiguration betreffen. Hierdurch ist es z.B. möglich, abhängig von der aktuell vorliegenden Konfiguration eine Verwendung der neuen Konfigurationsdaten zu verhindern, einzuschränken, oder in vollem Umfang durchzuführen. Zusätzlich oder alternativ kann das Vorgehen eine Überprüfung von bei einer Aktivierung der Konfigurationsdaten anzuwendenden Befehlen betreffen. Die Aktivierung ist ein Prozess, bei welchem die Konfigurationsdaten derart verarbeitet und zur Verfügung gestellt werden, dass im Anschluss, gegebenenfalls nach Durchführung bestimmter weiterer Schritte, die von den Konfigurationsdaten betroffene Einrichtung oder Einrichtungen mit der neuen bzw. Ziel- Konfiguration eingesetzt werden können. Es gilt, dass durch das Attribut bzw. den Wert des Attributes bei den verschiedenen Überprüfungen jeweils bestimmte Bedingungen, welche im Rahmen der Überprüfung zu testen sind, vorgegeben werden können.

Vorteilhaft ist es, wenn das Vorgehen eine Interpretation der Konfigurationsdaten betrifft. Hierdurch kann eine Angabe erfolgen, welche Bedeutung die Konfigurationsdaten haben. Dies ermöglicht eine besonders effiziente Übertragung der Konfigurationsdaten, da z.B. der Umfang der Konfigurationsdaten kleiner sein kann, wenn ein Attribut vorgibt, wie die Konfigurationsdaten zu interpretieren sind.

In Weiterbildung der Erfindung betrifft das Vorgehen einen oder mehrere einer Aktivierung der Konfigurationsdaten vorangehende Schritte. Hierbei kann es sich z.B. um die Ermittlung einer unter Verwendung der Konfigurationsdaten erreichbaren Zielkonfiguration handeln, und/oder das Speichern / zur Verfügungs-Stellen der Konfigurationsdaten oder der Zielkonfiguration an bestimmten Bestandteilen des Agenten oder anderer Einrichtungen.

Vorzugsweise betrifft das Vorgehen einen oder mehrere Schritte zur Aktivierung der Konfigurationsdaten. Dies kann z.B. die Speicherung der Konfigurationsdaten oder der Zielkonfiguration in bestimmen Speichern umfassen, die Art der Übertragung der Konfigurationsdaten oder der Zielkonfiguration von dem Agenten zu anderen Einrichtungen, den Zeitpunkt oder die Bedingungen, zu welchen die Zielkonfiguration als aktuelle Konfiguration zu verwenden ist.

Einer Ausgestaltung der Erfindung gemäß betrifft das Vorgehen einen oder mehrere auf eine Aktivierung der Konfigurationsdaten folgende Schritte, wie z.B. eine Speicherung der vorhergehenden Konfiguration oder der Konfigurationsdaten, eine Abfrage der aktuellen Konfiguration.

Weiterhin kann das Vorgehen einen oder mehrere Schritte für den Fall einer fehlgeschlagenen Aktivierung der Konfigurationsdaten betreffen. Hierbei ist es z.B. möglich, dass für alle oder lediglich einen Teil der Einrichtungen, welche von den Konfigurationsdaten betroffen sind, ein Zurücksetzen in Kombination mit einer erneuten Aktivierung erfolgt, wenn der Aktivierung fehlgeschlagen ist.

Vorzugsweise beschreibt das Vorgehen eine von dem Agenten auszuführende Operation, wie z.B. eine standardisierte Operation. Hierbei kann es sich um eine Operation handeln, welche ausschließlich von dem Agenten ausgeführt wird, oder welche von dem Agenten und einer oder mehrere weiterer Einrichtungen auszuführen ist.

Die Konfigurationsdaten und der zumindest eine Wert von dem zumindest einen Attribut sind vorzugsweise in einer gemeinsamen Nachricht enthalten, wie z.B. in einer XML-Datei. Alternativ ist es möglich, dass die Konfigurationsdaten getrennt von dem oder den Werten übertragen werden.

Der erfindungsgemäße Manager umfasst Mittel zum Versenden von Konfigurationsdaten und zumindest von einem Wert von zumindest einem Attribut an einen Agenten, wobei es sich bei dem zumindest einen Attribut um ein Attribut eines dem Agenten zugeordneten Objektes handelt, und wobei das Attribut ein Vorgehen in Bezug auf die Konfigurationsdaten beschreibt.

Der erfindungsgemäße Agent umfasst Mittel zum Empfangen von Konfigurationsdaten und von zumindest einem Wert von zumindest einem Attribut von einem Manager, wobei es sich bei dem zumindest einen Attribut um ein Attribut eines dem Agenten zugeordneten Objektes handelt, und wobei das Attribut ein Vorgehen in Bezug auf die Konfigurationsdaten beschreibt.

Der erfindungsgemäße Manager und der erfindungsgemäße Agent eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigt:

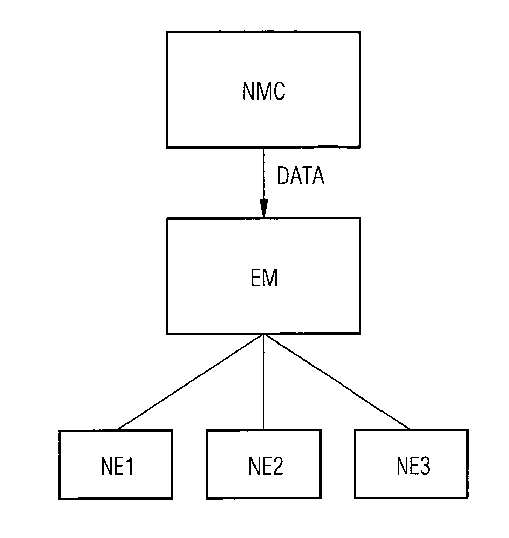

Figur 1: einen Ausschnitt aus einem Managementsystem.

Die Erfindung wird im folgenden anhand eines Managementsystems eines Mobilfunkkommunikationssystems näher erläutert. Hierbei ist die Erfindung jedoch nicht auf das Managen von Mobilfunkkommunikationssystemen beschränkt, sondern auch auf andere Managementsysteme anwendbar. Der in Figur 1 dargestellte Ausschnitt aus dem Managementsystem umfasst ein Netzwerkmanagementzentrum NMC, welches als Manager gegenüber dem Element Manager EM fungiert. In seiner Rolle als Manager ist der Element Manager EM an die drei Netzelemente NE1, NE2 und NE3 angebunden, welche ihm gegenüber als Agenten fungieren. Bei den Netzelementen NE1, NE2 und NE3 kann es sich z.B. um Basisstationen oder Funkzellen des Mobilfunkkommunikationssystems handeln.

Von dem Netzwerkmanagementzentrum NMC werden Konfigurationsdaten DATA an den Element Manager EM gesendet. Die Konfigurationsdaten DATA können sich auf die Konfiguration des Element Manager EM und/oder auf die Konfiguration der Netzelemente NE1, NE2 und NE3 beziehen. Die Versendung der Konfigurationsdaten DATA von dem Netzwerkmanagementzentrum NMC an den Element Manager EM erfolgt vorzugsweise gemäß dem Standard 3GPP TS 32.612. In diesem Fall handelt es sich bei dem Netzwerkmanagementzentrum NMC um einen "Bulk CM Manager", bei dem Element Manager EM um einen "Bulk CM Agent", und die Konfigurationsdaten werden im XML-Format gemäß dem Standard 3GPP TS 32.615 übertragen.

Es wird ein Objekt verwendet, im folgenden als VsDataContainer bezeichnet, welches dem Element Manager EM zugeordnet ist. D.h. das Objekt VsDataContainer steht im Objektbaum unter dem Objekt "Element Manager EM", es handelt sich somit um ein von dem Element Manager EM gemanagtes Objekt. Das Objekt VsDataContainer verfügt über Attribute, welche eine bestimmte Vorgehensweise in Bezug auf von dem Netzwerkmanagementzentrum NMC an den Element Manager EM übertragene Konfigurationsdaten definieren. Bei der Übertragung der Konfigurationsdaten DATA werden diesen Konfigurationsdaten DATA der Wert eines oder mehrerer Attribute des Objektes VsDataContainer beigefügt. Werden die Konfigurationsdaten DATA im XML-Format übertragen, ist der Wert bzw. die Werte Bestandteil der gleichen XML-Datei.

Es müssen den Konfigurationsdaten DATA nicht Werte für alle Attribute des Objektes VsDataContainer beigefügt werden. Vielmehr kann das Netzwerkmanagementzentrum NMC von Fall zu Fall entscheiden, welche Behandlung der Konfigurationsdaten erfolgen soll, und die entsprechenden Attribute verwenden, indem die Werte der Attribute dem Element Manager EM mit den Konfigurationsdaten DATA mitgeteilt werden.

Zur Verdeutlichung wird ein einfaches Beispiel betrachtet. Ein bestimmtes Attribut des Objektes VsDataContainer möge die Bedeutung "Sortieren der Konfigurationsdaten in aufsteigender Reihenfolge" haben. Die für dieses Attribut möglichen Werte sind "JA" und "NEIN". Den Konfigurationsdaten DATA wird die Information beigefügt, dass der Wert des bestimmten Attributes "JA" beträgt. Der Element Manager EM entnimmt der Nachricht des Netzwerkmanagementzentrums NMC, dass die Konfigurationsdaten DATA in aufsteigender Reihenfolge zu sortieren sind und führt diese Sortierung durch. Hierbei bezieht sich der von dem Netzwerkmanagementzentrum NMC gesetzte Wert des Attributes nur auf die Konfigurationsdaten DATA. Werden zu einem anderen Zeitpunkt erneut Konfigurationsdaten von dem Netzwerkmanagementzentrum NMC zu dem Element Manager EM gesendet, so kann das Netzwerkmanagementzentrum NMC einen anderen Wert für das Attribut wählen oder dieses Attribut nicht verwenden.

Im folgenden werden Beispiele betrachtet, auf welche Weise Attribute des Objektes VsDataContainer eingesetzt werden können.
- Ein Attribut kann einer Überprüfungshandlung nach Empfang der Konfigurationsdaten DATA entsprechen. Beispiele hierfür sind:
   o Konsistenztests von Daten, welche aktuell konfiguriert sind, d.h. welche konfiguriert sind, bevor die empfangenen Konfigurationsdaten DATA zur Anwendung kommen.
   o Konsistenztests der empfangenen Konfigurationsdaten DATA, z.B. Validierung einer empfangenen XML-Datei gegen das dazugehörige XML-Schema.
   o Konsistenztests der Zielkonfiguration, d.h. derjenigen Konfiguration, welche durch Anwendung der empfangenen Konfigurationsdaten DATA entstehen würde.
   o Test der Kommandofolge, welche angewendet müsste, um die Konfigurationsdaten DATA zu aktivieren.
      Die durch das Attribut vorgegebene Überprüfungshandlung kann insbesondere einer standardisierten Operation entsprechen. So definiert der Standard 3GPP TS 32.612 Release 5 beispielsweise die Operation "validate". Entspricht die Definition eines Attributs dieser Operation, so ist es möglich, in einem System, welches nach Release 4 arbeitet, eine nur in Rahmen von Release 5 mögliche Operation zu verwenden.
- Ein Attribut kann einer bestimmten Interpretation der Konfigurationsdaten DATA entsprechen. Beispiele hierfür sind:
   o Falls es mehrere potentielle Zielkonfigurationen gibt, kann durch das Attribut angegeben werden, welche dieser Zielkonfigurationen durch die Konfigurationsdaten DATA erreicht werden soll.
   o Das Attribut kann angeben, ob die Konfigurationsdaten DATA als Änderung gegenüber einem bestehenden Konfigurationszustand zu interpretieren sind oder ob sie als vollständiger Konfigurationszustand interpretiert werden sollen, z.B. um da Löschen vieler Objekte kompakt darstellen zu können.
- Ein Attribut kann einer Vorbereitungshandlungen für eine später durchzuführende Aktivierung der empfangenen Konfigurationsdaten DATA entsprechen. Empfängt der Element Manager EM Konfigurationsdaten DATA für die Netzelemente NE1, NE2 und NE3, so kann eine Aktivierung dieser Konfigurationsdaten DATA lange Zeit in Anspruch nehmen, denn zuerst müssen die Konfigurationsdaten DATA den Netzelementen NE1, NE2 und NE3 zur Verfügung gestellt werden, bevor es möglich ist, die Konfiguration der Netzelemente zu ändern und das System mit der Zielkonfiguration zu betreiben. Um dieses Vorgehen abzukürzen ist es im Rahmen einer Vorbereitungshandlungen für die später durchzuführende Aktivierung der neuen Konfigurationsdaten DATA beispielsweise möglich, dass die Konfigurationsdaten DATA bei den Vorbereitungshandlungen bereits an die Netzelemente NE1, NE2 und NE3 übertragen und von diesen gespeichert werden, so dass bei der Aktivierung lediglich in den Netzelementen NE1, NE2 und NE3 ein Kopieren der gespeicherten Konfigurationsdaten DATA in den für den Betrieb des Systems verwendeten Speicher nötig ist.
   Wie bereits in Bezug auf die Überprüfungshandlungen erläutert, eignet sich die Verwendung von standardisierten Operationen. So definiert der Standard 3GPP TS 32.612 Release 5 beispielsweise die Operation "preactivate" als Vorbereitungshandlung für eine später durchzuführende Aktivierung von Konfigurationsdaten.
- Ein Attribut kann angeben, welche Schritte bei einer Aktivierung der empfangenen Konfigurationsdaten DATA durchzuführen sind, so z.B.:
   o Die Zielkonfiguration wird im Element Managers EM erzeugt / ermittelt und bestimmten Bestandteilen des Element Managers EM zur Verfügung gestellt.
   o Die Zielkonfiguration wird an die Netzelemente übertragen, aber noch nicht aktiviert.
   o Die Zielkonfiguration wird in den Netzelementen aktiviert.
   o Die Netzelemente sollen durch einen vollständigen Austausch ihrer gesamten Konfigurationsdatenbank neu konfiguriert werden. Dies bewirkt eine rasche Neukonfiguration eines Netzelementes, jedoch bedeutet dies einen zeitweiligen Ausfall des betroffenen Netzelementes.
   o Die Neukonfiguration von Netzelementen soll durch eine Folge von Einzelkommandos durchgeführt werden. Dies nimmt bei einer Umkonfiguration in großem Umfang viel Zeit in Anspruch, jedoch wird die Funktionsfähigkeit des betroffenen Netzelementes nur wenig beeinflusst.
- Ein Attribut kann angeben, welche Schritte nach einer erfolgten Aktivierung der empfangenen Konfigurationsdaten DATA durchzuführen sind, so z.B.:
   o Die empfangenen Konfigurationsdaten bleiben im Element Manager EM gespeichert.
   o Die nach der Aktivierung tatsächlich bestehende Netzkonfiguration wird in den Element Manager EM geladen.
- Ein Attribut kann angeben, welche Schritte bei einer fehlgeschlagenen Aktivierung der Konfigurationsdaten DATA durchzuführen sind, so z.B.:
   o Die Netzelemente, bei welchen die Aktivierung fehlgeschlagen ist, werden zurückgesetzt und eine erneute Aktivierung wird lediglich in Bezug auf diese Netzelemente durchgeführt.
   o Alle Netzelemente werden zurückgesetzt.

Die durch die Attribute des Objektes VsDataContainer an den Element Manager EM übermittelten Vorgehensweisen können entweder nur für die aktuelle Session gelten, d.h. nur für die Verarbeitung der aktuellen Konfigurationsdaten DATA. Die übermittelte Vorgehensweise kann aber auch persistent im Element Manager EM gespeichert werden und gültig bleiben, bis durch neue Attributwerte eine andere Vorgehensweise eingestellt wird. Ob der Element Manager EM die Konfiguration persistent speichert oder nach der Session verwirft, kann wiederum über ein Attribut eingestellt werden. Auf diese Weise kann z.B. auch die "Upload" Operation verändert werden. Zum Beispiel kann eingestellt werden, ob eine Upload-Operation eine im Element Manager EM vorhandene Konfiguration an das Netzwerkmanagementzentrum NMC liefern soll, oder ob die Upload-Operation zunächst die Konfigurationen aus den Netzelementen NE1, NE2, NE3 in den Element Manager EM laden soll, und diese dann an das Netzwerkmanagementzentrum NMC liefern soll. Dieses Vorgehen ist sinnvoll, denn die Abfrage an die Netzelemente NE1, NE2, NE3 dauert lange; wenn bekannt ist, dass die im Element Manager EM gespeicherte Konfiguration aktuell ist, kann die Abfrage an die Netzelemente NE1, NE2, NE3 vermieden werden.

Beispielhaft wird hierzu ein Use Case aufgeführt:
1. StartSession
2. Download mit den Attributen forceUploadFromNE=True, storeIRPConfig=True
3. EndSession. Durch die obige Einstellung wird bei folgenden Upload-Operationen die Netzelemente NE1, NE2, NE3 befragt, bis die forceUploadFromNE durch einen Download auf "false" gesetzt wird.
4. StartSession
5. Upload. Das Upload wird zunächst die Konfiguration aus den Netzelementen NE1, NE2, NE3 in den Element Manager EM laden, dann die Konfiguration aus dem Element Manager EM in das Netzwerkmanagementzentrum NMC laden.
6. EndSession
7. StartSession
8. Download mit den Attributen forceUploadFromNE=False, storeIRPConfig=True
9. EndSession
10.StartSession
11.Upload. Das upload wird die im Element Manager EM vorhandene Konfiguration an das Netzwerkmanagementzentrum NMC liefern, ohne die Netzelemente NE1, NE2, NE3 zu befragen.
12.End Session.

Es wurden eine Vielzahl von Beispielen für mögliche Bedeutungen der Attribute des Objektes VsDataContainer vorgestellt. Es ist möglich, einzelne der vorgestellten Attribute oder verschiedene Kombinationen dieser Attribute einzusetzen. Von Vorteil ist, dass die zu verwendenden Attribute abhängig von den Bedürfnissen des Anwenders definiert werden können. Nach erfolgter Definition der Attribute bzw. ihrer möglichen Werte ist ein flexibles Konfigurationsmanagement möglich, denn von einem Konfigurationsvorgang zum nächsten können andere Werte von Attributen dem Element Manager EM mitgeteilt werden, so dass jeweils ein unterschiedlicher Ablauf der Konfiguration möglich ist.

## Patentansprüche

1. Verfahren zum Betreiben eines Managementsystems, bei welchem
Konfigurationsdaten (DATA) und zumindest ein Wert von zumindest einem Attribut von einem Manager (NMC) an einen Agenten (EM) übertragen werden,
wobei es sich bei dem zumindest einen Attribut um ein Attribut eines dem Agenten (EM) zugeordneten Objektes handelt,
und wobei das Attribut ein Vorgehen in Bezug auf die Konfigurationsdaten (DATA) beschreibt.

2. Verfahren nach Anspruch 1, bei dem
die Konfigurationsdaten (DATA) die Konfiguration des Agenten (EM) und/oder die Konfiguration einer oder mehrerer gegenüber dem Agenten (EM) als Agenten fungierenden Einrichtungen (NE1, NE2, NE3) betreffen.

3. Verfahren nach Anspruch 1 oder 2, bei dem das Vorgehen eine Überprüfung
o der Konfigurationsdaten (DATA), und/oder
o einer unter Verwendung der Konfigurationsdaten (DATA) erreichbaren Konfiguration, und/oder
o einer vor Verwendung der Konfigurationsdaten (DATA) vorliegenden Konfiguration, und/oder
o von bei einer Aktivierung der Konfigurationsdaten (DATA) anzuwendenden Befehlen
betrifft.

4. Verfahren nach einem der Ansprüche 1 bis 3, bei dem das Vorgehen eine Interpretation der Konfigurationsdaten (DATA) betrifft.

5. Verfahren nach einem der Ansprüche 1 bis 4, bei dem das Vorgehen einen oder mehrere einer Aktivierung der Konfigurationsdaten (DATA) vorangehende Schritte betrifft.

6. Verfahren nach einem der Ansprüche 1 bis 5, bei dem das Vorgehen einen oder mehrere Schritte zur Aktivierung der Konfigurationsdaten (DATA) betrifft.

7. Verfahren nach einem der Ansprüche 1 bis 6, bei dem das Vorgehen einen oder mehrere auf eine Aktivierung der Konfigurationsdaten (DATA) folgende Schritte betrifft.

8. Verfahren nach einem der Ansprüche 1 bis 7, bei dem das Vorgehen einen oder mehrere Schritte für den Fall einer fehlgeschlagenen Aktivierung der Konfigurationsdaten (DATA) betrifft.

9. Verfahren nach einem der Ansprüche 1 bis 8, bei dem das Vorgehen eine von dem Agenten (EM) auszuführende Operation beschreibt.

10. Verfahren nach einem der Ansprüche 1 bis 9, bei dem die Konfigurationsdaten (DATA) und der zumindest eine Wert von dem zumindest einen Attribut in einer gemeinsamen Nachricht enthalten sind.

11. Manager (NMC) mit Mitteln zum Versenden von Konfigurationsdaten (DATA) und von zumindest einem Wert von zumindest einem Attribut an einen Agenten (EM),
wobei es sich bei dem zumindest einen Attribut um ein Attribut eines dem Agenten (EM) zugeordneten Objektes handelt,
und wobei das Attribut ein Vorgehen in Bezug auf die Konfigurationsdaten (DATA) beschreibt.

12. Agent (EM) mit Mitteln zum Empfangen von Konfigurationsdaten (DATA) und von zumindest einem Wert von zumindest einem Attribut von einem Manager (NMC),
wobei es sich bei dem zumindest einen Attribut um ein Attribut eines dem Agenten (EM) zugeordneten Objektes handelt,
und wobei das Attribut ein Vorgehen in Bezug auf die Konfigurationsdaten (DATA) beschreibt.
